Europäisches Patentamt

European Patent Office

Office européen des brevets

(11) Publication number: **0 265 575 B1**

# EUROPEAN PATENT SPECIFICATION

(45) Date of publication of patent specification: **29.01.92**    (51) Int. Cl.⁵: **G06F 12/06**

(21) Application number: **86430046.2**

(22) Date of filing: **30.10.86**

(54) **Data processing system having automatic address allocation arrangements for addressing interface cards.**

(43) Date of publication of application:
**04.05.88 Bulletin 88/18**

(45) Publication of the grant of the patent:
**29.01.92 Bulletin 92/05**

(84) Designated Contracting States:
**BE CH DE ES FR GB IT LI NL SE**

(56) References cited:
**EP-A- 0 068 569       EP-A- 0 074 865
EP-A- 0 087 367       EP-A- 0 161 344
GB-A- 2 060 961       GB-A- 2 172 779**

(73) Proprietor: **International Business Machines Corporation
Old Orchard Road
Armonk, N.Y. 10504(US)**

(72) Inventor: **Louis, Philippe Pierre Robert
30 Rue du Piolet
F-06800 Cagnes sur Mer(FR)**
Inventor: **Montanari, Gérard Michel
Résidence "Cagnes II" 50, Chemin du Val Fleuri
F-06800 Cagnes sur Mer(FR)**
Inventor: **Leotard, Robert Lucien
5707, Route de Grasse Tourrettes sur Loup
F-06140 Vence(FR)**

(74) Representative: **Tubiana, Max
Compagnie IBM France Département de Propriété Intellectuelle
F-06610 La Gaude(FR)**

## Description

### Technical field

The present invention relates to data processing systems and more particularly to apparatus for simplifying the expansion of such systems.

### Background art

Configuring computer systems to individual needs or desires, by adding system peripheral modules such as video display devices, floppy disk data storage devices, printer communication facilities, telephone management systems and the like is often done.

The addition of new capabilities to the computer system requires the plugging of interface circuit cards into the available slots of the computer board. However, after each "module addition" or substraction, the control processor must be able to address separatively every interface card plugged on the board.

The problem of address allocation has been known for many years, and different solutions have been worked out since.

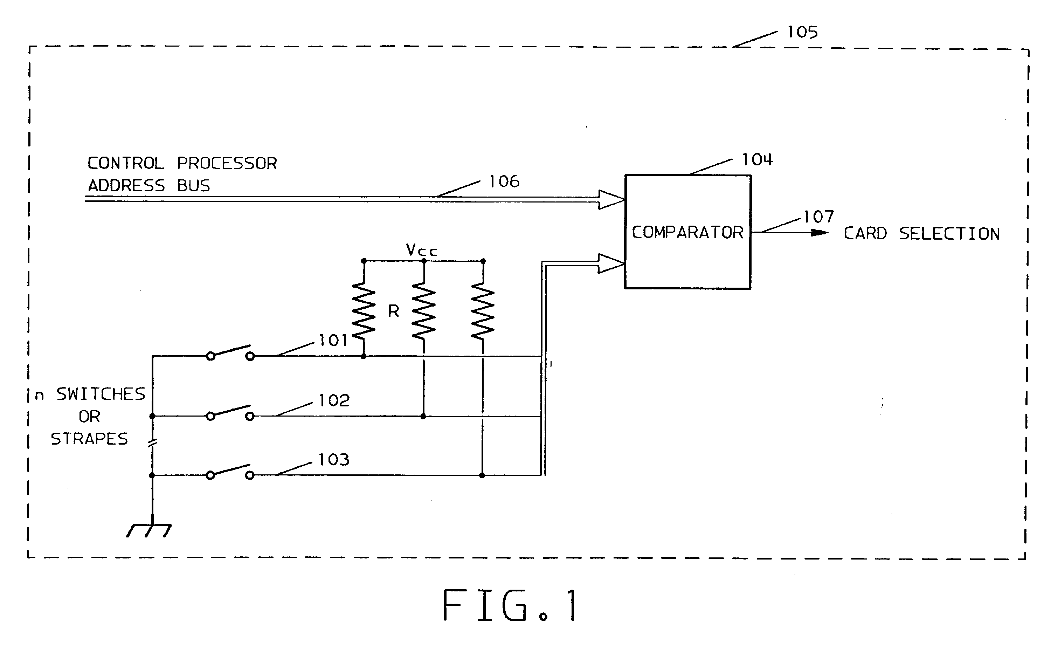

With respect to a first solution of prior art, each interface circuit card has resident decoding circuitry so that when the control processor wants to communicate with a card, the interface circuit can be addressed, irrespective of its physical location among the slots. That device is recalled in Figure 1. The control processor generates the address through the address bus (106) on which the adapter card (105) is connected. That adapter is personalized by the switches or straps (101) to (103) and others. A comparator (104) enables the selection of the card by lead (107) if the two addresses coincide. The main drawback is that manual intervention is required at installation time which may lead to configuration errors. That also involves more detailed customer documentation booklets and entails complex maintenance operations. This solution also prevents the user of computer system to plug two similar cards which do not have a resident decoding circuitry. In the Personal Computer, for instance, as no strap or switch exist on the SDLC (Serial Data Link Controller) adapter, the latter has a unique address and therefore only one card of this type can be plugged.

A second solution in prior art which does not require manual intervention at installation time is based on the same principle apart from the fact that the switches or straps are located on the board. The different addresses are determined by decoding a bit configuration specific to each slot. That feature, even though avoiding manual intervention entails new disadvantages. Since the address must be provided by the physical slot of the board, the computer board must obviously be designed to provide this information and thus rule out any small computer system like the Personal Computer from that capability. In addition, that solution does not allow any longer the possibility of plugging one interface card in a slot irrespective of its physical location on the board and prevents the plugging of two identical cards which have no specific decoding means (for instance two memory extension cards).

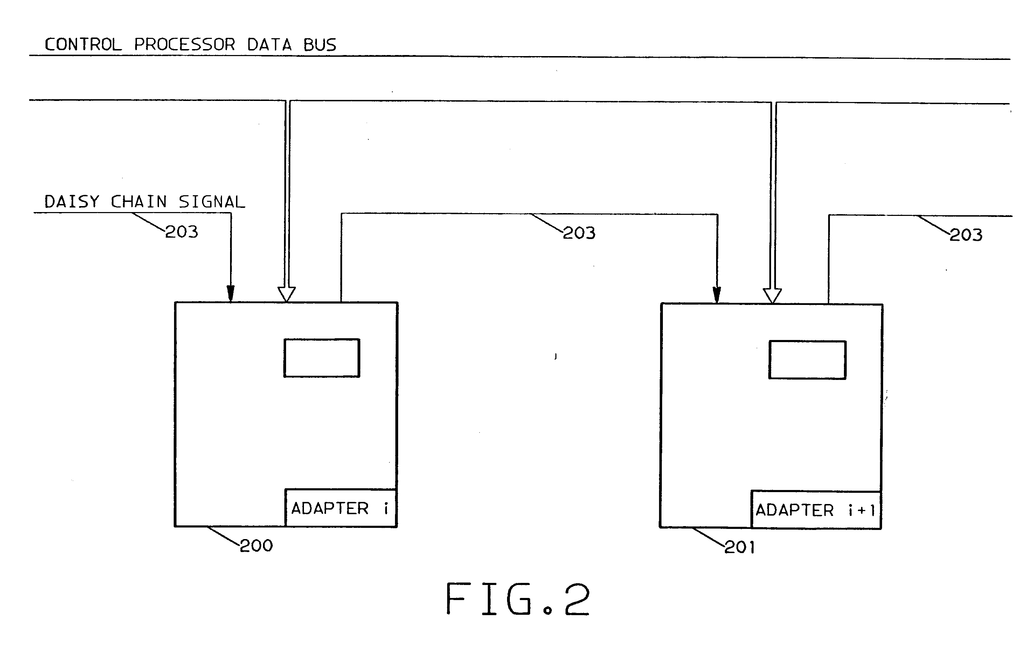

The circuitry which effects a serial scanning of the "ordered" slots has, in the prior art, been some form of "daisy chain" configuration. By using a signal which is chained through all adapters, it becomes possible to let each adapter communicate successively with the main processor and assign different addresses. Figure 2 illustrates that principle: daisy chain signal on lead 203 goes through the adapter card 200 which can then give the priority to the next adapter card 201 and so on. The card does not need a specific manipulation at installation time and that the base machine is designed to provide the priority information: the board needs a particular signal with an input and an output on each slot only involved during the initialization period of the addressing.

US patent 4,556,953 "Interchangeable interface circuitry arrangements for use with a data processing system" by A. Ronald Caprio et al discloses an arrangement whereby any one of a plurality of different or similar interface circuit cards can be located into any one of a number of slots without preassignment. This device implies that the base machine is designed to provide such a function, particularly it requires an extra lead for transmitting a "signal (..) which indicates that there is an option card present at the particular physical location in which the card is inserted." (page 3 line 7 to 10). Thus, that feature cannot be used on small system such as the Personal Computer.

EP-A-0 161 344 describes a system which assigns addresses for an address-controlled data exchange to plug-in circuit boards (BG1) by means of a control unit (SE). Each circuit board (BG) is given a circuit board identifier designating the respective type of circuit (BG1). In addition, each circuit (BG1) is assigned a slot identifier by means of a generator (G). During an initialization phase, all circuit boards (BG1) are called up by means of their slot identifiers and in turn send their circuit board identifier to the control unit (SE). The control unit (SE) then addresses the slot identifier to assign a relevant address to each circuit board (BG1), which is thereafter used for all further data exchanges. Similarly than for US patent 4 556 953, that system requires an extra control lead L1 for initiating the initialization phase.

The present invention eliminates the necessity of manual intervention on the board or on the interface card, decreases the complexity of maintenance and allows cost reduction.

The present invention allows the plugging of one or several cards, similar or different in the slots available irrespective of their location on the board.

It is an object of the present invention to eliminate the ordering of interface circuit cards in particular slots, to accommodate a priority determination plan and permits vacant slots to exist between active interface cards.

It is an object of the invention to provide the above capabilities for computer systems having common buses, a priori not designed to allow those functions, such as small systems like the Personal Computer.

The invention is the fulfillment of a philosophy that would permit users of computer systems to plug a new card in one slot available irrespective of its position on the board and irrespective of the existence and the nature of the other interface cards also plugged.

These and other objects are provided by view of the data processing system according to the invention which has automatic allocation arrangements for addressing interface cards. An interface card is described according to claim 1

Therefore, any interface card can be assigned an addresses which will be used for all further data exchanges without necessitating the use of any extra control lead.

Brief description of the drawings

Figure 1 describes the principle of the identification of cards using switches or straps located on cards, as known in the prior art.
Figure 2 describes the process of cards identification using daisy chain signal, as known in the prior art.
Figure 3 describes briefly the principle of the invention
Figure 4 details a preferred embodiment according to the principle of the invention.

Description of the Invention

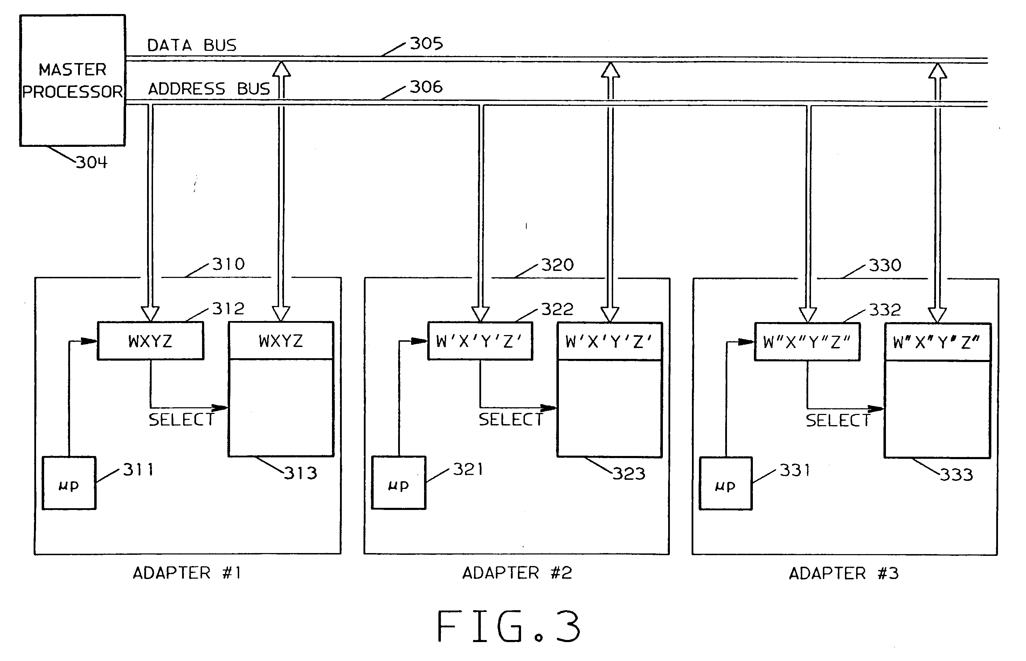

The invention allows automatic address allocation and configuration between the main processor and the adapters. Figure 3 shows the principle of the invention. The master processor 304 of the base system communicates with the interface cards 310, 320 and 330 through a data bus 305, an address bus 306 and a control bus 307. Interface card 310 includes a processor 311 and two registers 312 and 313. Interface card 320 includes a processor 321 and two registers 322 and 323.

Similarly interface card 330 includes a processor 331 and two registers 332 and 333. Obviously, the number of cards is not limited to three and may be increased according to the requirements of the user simply by plugging an extra card in one of the available slots. In the memory space, a specific area is reserved for adapters. Let's suppose that all our adapters have a specific area called 'AA' (Typically, 'AA' size may be about one Kilobyte). The reader should have noticed the symmetrical aspect of the architecture, and until now no adapter card (even with different identification or function) can be discriminated by an address since they do not have their specific address yet. An initialization sequence will start and give the master processor the capability to address each adapter card one at a time and if needed, reassign to them specific addresses if required by the application programs. The initialization sequence begins with an initialization command, which may be the transmission on address bus 306 of a initialization address common to any adapter and to which each one answer by performing the initialization sequence. During this sequence, all adapters 310, 320 and 330 compute a random address within the area 'AA'. This random address can be computed either by a processor on the card or by the hardware itself if the card does not have a processor. For instance, the address WXYZ chosen by the adapter 310 will become its own address stored in the register 312 and will be used to decode address bus 306.
Similarly, adapter 320 (respectively 330) will store address W'X'Y'Z' (respectively W"X"Y"Z") in register 322 (respectively 333)

Then, master processor 304 scans all possible addresses in the area 'AA'. When an address that has not been chosen by the adapter cards is scanned, no adapter answers and therefore, nothing is read by the master processor 304. (If the data bus is tri-state, FFFF is read).

When the scanning passes on the address WXYZ chosen by the adapter card 310, that value is sent back by the adapter as an answer of the read instruction of the master processor 304. It should be noticed that any others signals to indicate the presence of the adapter may be used, such ad card present, card I/O ...

At the end of the scanning on all the area 'AA', the master processor normally gets as many answers as the number of cards plugged.

In the unlikely case where two or more adapters have chosen the same random address, the number of answers received will be less than the number of adapters in its configuration since the adapters with the same address will answer simultaneously. The master processor 304 will restart the procedure by writing the initialization command into all adapters again. That procedure will go on as long as each adapter card has a different random address.

When the master processor 304 knows the specific address chosen by each adapter card, it has the capability of addressing each card separatively. Particularly, the master processor 304 can read the identifier of the card to determine its type: SDLC card, floppy disk, interface card and so on.

The master processor can also reassign new addresses (if required) for each adapter according to the application program requirements. These new addresses are stored in the registers 313, 323 and 333. That may end with the creation of a configuration table.

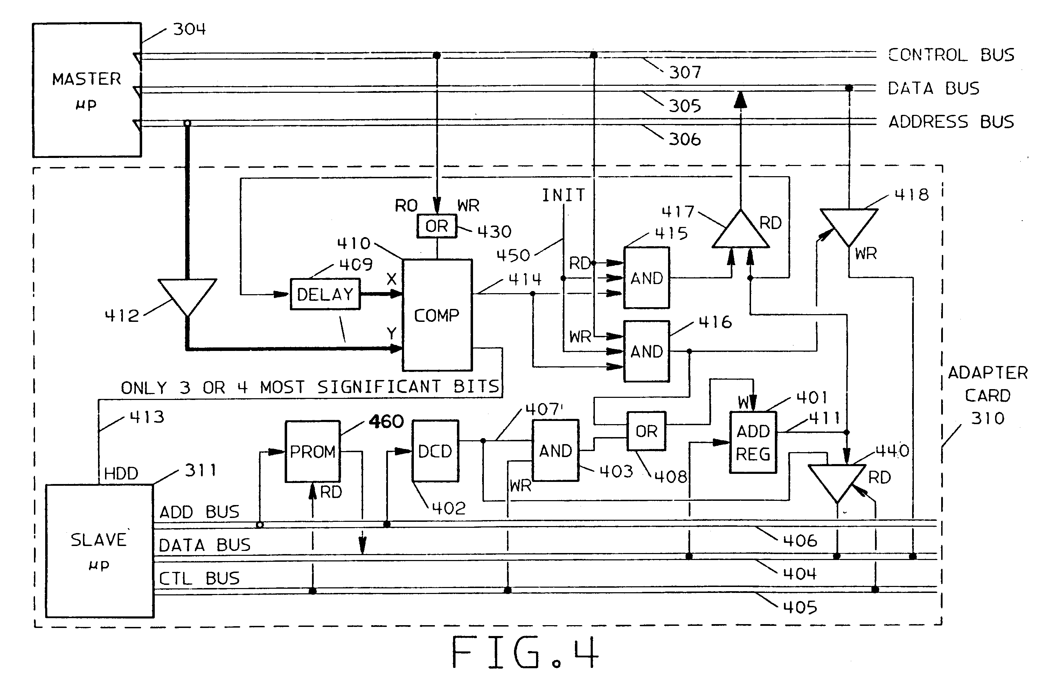

Figure 4 describes with more details an example of a preferred embodiment of the invention. As previously, master processor 304 communicates with interface card 310 through address bus 306, data bus 305 and control bus 307. The latter bus generates the write and read pulses.

The interface card 310 includes a slave processor 311 communicating through an address bus 406, a data bus 404 and a control bus 405. A control lead 413 enables those busses to be frozen (high impedance value). A PROM 460 stores processor 311 control program for the sequencing of all the operations described further and particularly for the initialization sequence.

In this particular embodiment, the two registers 312 and 313 have been reduced to a register 401 and therefore if the re-assignment process is performed, the new address will supersede the previous one which has been chosen by processor 311.

At the beginning of the initialization sequence, slave processor 311 computes a random address WXYZ for instance. Then the value of the random address WXYZ is transmitted over bus 404 while bus 406 carries the address of address register 401. That address is decoded by a decoder 402 which enables a control lead 407 thereby causing the write pulse coming from control bus 405 to pass through an AND gate 403. The write pulse is transmitted to an OR gate 408 connected to the write input (WR) of address register 401. The value of WXYZ carried by data bus 404 is eventually stored into address register 401.

At this step, the address register 401 can be read by slave processor 311, if necessary for checking purposes, through gate 440 with a read command on the control bus 405. The value WXYZ is automatically sent to a comparator circuit 410: The output from register 401 is entered into a delay circuit 409 by a lead 411 and then transmitted to X input of comparator 410 after a delay time.

An OR gate 430 controls the validation of the comparison in comparator 410 when a 'READ' or 'WRITE' occurs on control bus 307.

The address of this specific adapter 310 for master processor 304 is WXYZ by now. In summary, it can be noticed that the specific address register 401 is accessible through two differents addresses. It can be addressed by slave processor 311 by means of a predetermined fixed address through decoder 402. It can also be addressed by main processor 304 by means of the random address WXYZ computed by slave processor 311 through comparator 410.
At the end of the first step of the initialization, each adapter has computed its own random address.

Then, master processor 304 scans all possible addresses within the allocated area 'AA' with a succession of read command. When the value WXYZ is transmitted over address bus 306, it is sent immediately through driver 412 to comparator 410. Since the values of the two inputs X and Y of comparator 410 are equal, control leads 413 and 414 are enabled. Control lead 413 when enabled permits busses 404, 405, 406 to be frozen.

Control lead 414 permits the read pulse coming from master processor 304 through control bus 307 to be transmitted through an AND gate 415. The output of gate 415 enables a driver 417 to transmit the output of register 401 to data bus 305. Thus, master processor 304 can read the random address of the adapter WXYZ on its data bus 305 as an answer to the read command telling the master processor that the address has been chosen by at least one adapter. Master processor 304 knows the number and the values of the addresses chosen by all the adapters. If it happens that two or more adapters have chosen the same address, the number of the answers is lower than the number of cards plugged. In this case, a new initialization sequence will be performed in order to get a different address for each adapter.

At the end of that initialization sequence, master processor 304 knows the random addresses chosen and therefore can address each adapter separatively. Depending on the requirements of the customer or the program application, it may be necessary to reassign a new address to each interface card. The reassignment of the cards will allow the application program to address the interface cards independently of the prior random addresses chosen in the initialization sequence.

To reassign an address to an adapter master processor 304 writes this new address into address register 401 as following. During a period master processor addresses interface card 310 with random address WXYZ carried on address bus 306. The values X and Y of comparator 410 being equal, leads 413 and 414 are enabled. Control lead 413 freezes busses 404, 405 and 406. Control lead 414 enables AND gates 415 and 416. An INIT lead 450 is controlled by master processor 304 or by internal hardware and is connected to AND gates 415 and 416. It will be used to lock register 401 when the initialization sequence is performed.

During a second period, master processor 304 transmits the new adapter address on data bus 305 and sends the write pulse on the control bus 307. AND gate 416 is set ON and validates a bus receiver 418. Data bus 305 is dotted with slave data bus 404 which was at high impedance AND gate 416 also validates OR gate 408 which causes the value of the new card address to be stored into address register 401. The value stored is then transmitted to X input of comparator 410 through delay circuit 409. This delay is needed in order to ensure a pulse large enough on lead 414 and therefore on the output of OR gate 408. That delay circuit may be replaced by a logic multiplexer. As the values X and Y are now different, the comparison fails and gates 415, 416 and 418 go down. At the end of that reassignment sequence, the new address is stored into address register 401 and therefore can be used by master processor 304 to address the card as described above.

It should be noticed that, as usual, the adapter address consists of the most significant bits of address, the less significant bits are used to select the different registers within the adapter.

The adapter may also have an identifier register specific to the type of adapter ( SDLC card, floppy disk interface card, printer card ...).
By reading that register during the initialization sequence, master processor 304 has the capability to determine which type of adapter corresponds to a given random address and therefore to distribute a new addressing step according to the identifier register and the nature of the card. This is a way of creating an automatic configuration table and thus allowing the application program to address each card irrespective of the prior random addresses computed during the initialization sequence.

It should be noticed that usually all modules described in figure 4, except delay circuit 409 and address register 401, already exists on common interfaced cards and therefore the invention may be implemented on prospective cards without involving any significant extra cost.

## Claims

1. A data processing system having automatic allocation arrangements for addressing interface cards, one interface card (310) including:

   - means (460) for storing a card identifier designating the respective type of interface card,
   - means (311) active during an initialization sequence for generating a random address used by said data processing system for addressing said interface card (310) and for reading the content of said card identifier storing means (460),
   - means (401) active during said initialization sequence for storing a relevant address assigned by said data processing system during said initialization sequence,

   characterized in that said data processing system includes means (304) for generating an initialization command which transmitts on an address bus (306) an initialization address common to any interface card and to which each one answers by performing said initialization sequence,

   said interface cards further includes means (311, 460, 410) for decoding said initialization command and for starting said initialization sequence.

2. A data processing system according to Claim 1 characterized in that:

   said decoding means (413, 460, 410) further include :

   . means (311, 460) for selecting a random address within a specific memory area
   . a register (401) for storing said selected address
   . a comparator (410) for comparing said selected address with the value of the address existing on said address bus (306), and
   . means (415, 416) responsive to said comparison for performing the addressing of the selected card.

3. A data processing system according to Claim 2 characterized in that

   said selecting means (311, 460) further include

   - a slave processor (311) for controlling said decoding means (311, 401, 410)
   - a memory (460) for storing instructions for said slave processor (311)
   - three internal data (404), address (406) and control (405) busses connected to said slave processor (311)

   said initialization sequence includes the following steps:

- said slave processor (311) computes said random address,
- said slave processor (311) stores said random address into said register (401), the output of which is connected to a first input (X) of said comparator (410)
- said processor (304) scans all possible addresses within said specific area, the addresses being transmitted from said address bus (306) to a second input of said comparator (410), said comparator (410) detecting when the address carried by said address bus (306) matches the value stored in said register (401), and
- said interface card (310) transmits a signal to said processor (304) indicating that the address carried by said address bus (306) has been selected and can be used to address one specific interface card.

4. A data processing system according to Claim 3 characterized in that:

said initialization sequence further comprises the following steps:

- said processor (304) transmits said selected random address on said address bus (306)
- said processor (304) reads an identification register of said interface card to determine which type of interface card corresponds to said selected random address whereby generating a configuration table in memory.

5. A data processing system according to Claim 2 characterized in that said interface card (310) includes means (416) for reassigning a new address in said register (401) according to the requirements of a given application program during said initialization sequence, whereby said application program manages to address separately said interface cards irrespective of said prior random addresses.

6. A data processing system according to Claim 5 characterized in that:

said selecting means (311, 460) further include

- a slave processor (311) for controlling said decoding means (311, 401, 410)
- a memory (460) for storing instructions for said slave processor (311)
- three internal data (404), address (406) and control (405) busses connected to said slave processor (311)

said interface card (310) further includes

- means (418) for transmitting data from said data
  bus (305) to said internal data bus (404)

said reassignment of the address stored in said register (401) includes the steps:

- said processor (304) addresses said interface card by transmitting said selected random address on said address bus (306)
- said processor (304) transmits the new address to be stored into said register (401) on said data bus (305)
- said transmitting means (418) transmits said new address from said data bus (305) to said internal data bus (404)
- said slave processor (311) stores said new address existing on said internal data bus (404) into said register (401), the output of which is connected to a first input (X) of said comparator (410) and therefore the new address stored in said register (401) can be used by said processor (304) to address said interface card (310).

**Revendications**

1. Système de traitement de données ayant des dispositifs d'attribution automatique pour l'adressage de cartes d'interface, une carte d'interface (310) comprenant :
   - des moyens (460) de stockage d'un identificateur de carte désignant le type respectif de la carte d'interface,
   - des moyens (311), actifs pendant une séquence d'initialisation, qui génèrent une adresse aléatoire utilisée par ledit système de traitement de données pour l'adressage de ladite carte d'interface (310) et pour la lecture du contenu desdits moyens (460) de stockage d'identificateur de carte,
   - des moyens (401), actifs pendant ladite séquence d'initialisation, qui stockent une adresse correspondante attribuée par ledit système de traitement de données pendant ladite séquence d'initialisation, caractérisé en ce que
   - ledit système de traitement de données comprend des moyens (304) de génération d'une instruction d'initialisation qui transmet, sur un bus d'adresse (306), une adresse d'initialisation commune à toutes les cartes d'interface et à laquelle chaque carte répond par l'exécution de ladite séquence d'initialisation, et

- lesdites cartes d'interface comprennent en outre des moyens (311,460,410) de décodage de ladite instruction d'initialisation, et de démarrage de ladite séquence d'initialisation.

2. Système de traitement de données suivant la revendication 1, caractérisé en ce que les moyens de décodage (413,460,410) comprennent en outre :
- des moyens (311,460) de sélection d'une adresse aléatoire dans une zone de mémoire spécifique,
- un registre (401) de stockage de ladite adresse choisie,
- un comparateur (410) pour comparer ladite adresse choisie à la valeur de l'adresse existant sur ledit bus d'adresse (306), et
- des moyens (415,416) qui répondent à ladite comparaison pour effectuer l'adressage de la carte choisie.

3. Système de traitement de données suivant la revendication 2, caractérisé en ce que lesdits moyens de sélection (311,460) comprennent en outre :
- un processeur asservi (311) pour commander lesdits moyens de décodage (311,401,410),
- une mémoire (460) de stockage d'instructions pour ledit processeur asservi (311), et
- trois bus internes de données (404), d'adresse (406) et de commande (405), connectés audit processeur asservi (311),
  et en ce que ladite séquence d'initialisation comprend les étapes suivantes :
- ledit processeur asservi (311) calcule ladite adresse aléatoire,
- ledit processeur asservi (311) stocke la dite adresse aléatoire dans ledit registre (401) dont la sortie est reliée à une première entrée (X) dudit comparateur(410),
- ledit processeur (304) explore toutes les adresses possibles dans ladite zone spécifique, les adresses étant transmises dudit bus d'adresse (301) à une deuxième entrée dudit comparateur (410), ledit comparateur (410) détectant si l'adresse portée par ledit bus d'adresse (306) concorde avec la valeur stockée dans ledit registre (401), et

- ladite carte d'interface (310) transmet un signal audit processeur (304), indiquant que l'adresse portée par ledit bus d'adresse (306) a été choisie et peut être utilisée pour adresser une carte d'interface spécifique.

4. Système de traitement de données suivant la revendication 3, caractérisé en ce que ladite séquence d'initialisation comprend en outre les étapes suivantes :
- ledit processeur (304) transmet ladite adresse aléatoire choisie sur ledit bus d'adresse (306) et
- ledit processeur (304) lit un registre d'identification de ladite carte d'interface pour déterminer le type de carte d'interface qui correspond à la dite adresse aléatoire choisie, de manière à générer une table de configurations en mémoire.

5. Système de traitement de données suivant la revendication 2, caractérisé en ce que ladite carte d'interface (310) comprend des moyens (416) pour réaffecter une nouvelle adresse dans ledit registre (401) conformément aux besoins d'un programme d'application donné pendant ladite séquence d'initialisation, de sorte que ledit programme d'application s'arrange pour adresser séparément lesdites cartes d'interface indépendamment desdites adresses aléatoires antérieures.

6. Système de traitement de données suivant la revendication 5, caractérisé en ce que lesdits moyens de sélection (311,460) comprennent en outre :
- un processeur asservi (311) pour commander lesdits moyens de décodage (311,401,410),
- une mémoire (460) de stockage d'instructions pour ledit processeur asservi (311) , et
- trois bus internes de données (404), d'adresse (406) et de commande (405), connectés audit processeur asservi (311),
  en ce que ladite carte d'interface (310) comprend en outre :
- des moyens (418) pour transmettre des données dudit bus de données (305) audit bus interne de données (404),
  et en ce que ladite réaffectation de l'adresse stockée dans ledit registre (401) comprend les étapes suivantes :
- ledit processeur (304) adresse ladite carte d'interface par transmission de ladite adresse aléatoire choisie sur ledit bus d'adresse (306),

- ledit processeur (304) transmet la nouvelle adresse à stocker dans ledit registre (401), sur ledit bus de données (305),
- lesdits moyens de transmission (418) transmettent ladite nouvelle adresse, dudit bus de données (305) audit bus interne de données (404),
- ledit processeur asservi (311) stocke ladite nouvelle adresse,existant sur ledit bus interne de données (404), dans ledit registre (401) dont la sortie est connectée à une première entrée (X) dudit comparateur (410), et la nouvelle adresse stockée dans ledit registre (401) peut donc être utilisée par ledit processeur (304) pour adresser ladite carte d'interface (310).

**Patentansprüche**

1. Datenverarbeitungssystem mit automatischen Zuordnungsaufteilungen zum Adressieren von Schnittstellenkarten, wobei eine Schnittstellenkarte (310) aufweist:

   Mittel (460) zum speichern einer Kartenidentifizierung, welche die entsprechende Art der Schnittstellenkarte bezeichnet,

   Mittel (311), die während einer Initialisierungsfolge aktiv sind, um eine zufällige Adresse zu erzeugen, die von dem Datenverarbeitungssystem zum Adressieren der Schnittstellenkarte (310) und zum Lesen des Inhalts der Speichermittel (460) für eine Kartenidentifizierung verwendet wird,

   Mittel (401), die während der Initialisierungsfolge aktiv sind, um eine entsprechende Adresse zu speichern, die von dem Datenverarbeitungssystem während der Initialisierungsfolge zugewiesen wird,

   dadurch gekennzeichnet, daß das Datenverarbeitungssystem Mittel (304) aufweist, um einen Initialisierungsbefehl zu erzeugen und das auf einem Adreßbus (306) eine Initialisierungsadresse überträgt, die mit irgendeiner Schnittstellenkarte gemeinsam ist und auf die jede durch Durchführen der Initialisierungsfolge antwortet und die Schnittstellenkarte ferner Mittel (311, 460, 410) zum Decodieren des Initialisierungsbefehls und zum Starten dar Initialisierungsfolge aufweist.

2. Datenverarbeitungssystem nach Anspruch 1, dadurch gekennzeichnet, daß die Decodiermittel (413, 460, 410) ferner aufweisen:

   Mittel (311, 460) zum Auswählen einer zufälligen Adresse innerhalb eines speziellen Speicherbereichs,

   ein Register (401) zum Speichern der ausgewählten Adresse,

   einen Komparator (410) zum Vergleichen der ausgewählten Adresse mit dem Wert der auf dem Adreßbus (306) vorhandenen Adresse und

   Mittel (415, 416), die auf den Vergleich ansprechen, um das Adressieren der ausgewhälten Karte durchzuführen.

3. Datenverarbeitungssystem nach Anspruch 2, dadurch gekennzeichnet, daß

   die Auswahlmittel (311, 460) ferner aufweisen:

   einen abhängigen Prozessor (311) zum Steuern der Decodiermittel (311, 401, 410),

   einen Speicher (460) zum Speichern von Befehlen für den abhängigen Prozessor (311),

   drei interne Daten(404)-, Adreß(406)-, und Steuer(405)-Busse, die mit dem abhängigen Prozessor (311) verbunden sind und

   die Initialisierungsfolge die folgenden Schritte umfaßt:

   der abhängige Prozessor (311) berechnet die zufällige Adresse,

   der abhängige Prozessor (311) speichert die zufällige Adresse in dem Register (401), dessen Ausgang mit einem ersten Eingang (X) des Komparators (410) verbunden ist,

   der Prozessor (304) fragt alle möglichen Adressen innerhalb des speziellen Bereiches ab, wobei die Adressen aus dem Adreßbus (306) zu einem zweiten Eingang des Komparators (410) übertragen werden und der Komparator (410) erfaßt, wenn die von dem Adreßbus (306) geführte Adresse zu dem in dem Register (401) gespeicherten Wert paßt und

   die Schnittstellenkarte (310) überträgt ein Signal an den Prozessor (304), das anzeigt, daß die von dem Adreßbus (306) geführte Adresse ausgewählt wurde und zum Adressieren einer speziellen Schnittstellenkarte verwendet werden kann.

**4.** Datenverarbeitungssystem nach Anspruch 3, dadurch gekennzeichnet, daß

die Initialisierungsfolge ferner die folgenden Schritte umfaßt;

der Prozessor (304) überträgt die ausgewählte zufällige Adresse auf dem Adreßbus (306)

der Prozessor (304) liest ein Identifizierungsregister der Schnittstellenkarte, um zu bestimmen, welche Art einer Schnittstellenkarte der ausgewählten zufälligen Adresse entspricht, wodurch eine Konfigurationstabelle in einem Speicher erzeugt wird.

**5.** Datenverarbeitungssystem nach Anspruch 2, dadurch gekennzeichnet, daß die Schnittstellenkarte (310) Mittel (416) zum wiederholten Zuweisen einer neuen Adresse in dem Register (401) entsprechend den Erfordernissen eines gegebenen Anwendungsprogramms während der Initialisierungsfolge aufweist, wodurch es das Anwendungsprogramm ermöglicht, die Schnittstellenkarten unabhängig von den vorherigen zufälligen Adressen getrennt zu adressieren.

**6.** Datenverarbeitungssystem nach Anspruch 5, dadurch gekennzeichnet, daß

die Auswahlmittel (311, 460) ferner aufweisen:

einen abhängigen Prozessor (311) zum Steuern der Decodiermittel (311, 401, 410),

einen Speicher (460) zum Speichern von Befehlen für den abhängigen Prozessor (311),

drei interne Daten(404)-, Adreß(406)-, und Steuer(405)-Busse, die mit dem abhängigen Prozessor (311) verbunden sind

die Schnittstellenkarten (310) ferner aufweist:

ein Mittel (418) zum Übertragen von Daten aus dem Datenbus (305) an den internen Datenbus (404) und

das wiederholte Zuweisen der in dem Register (401) gespeicherten Adresse die Schritte umfaßt:

der Prozessor (304) adressiert die Schnittstellenkarte durch Übertragen der ausgewählten zufälligen Adresse auf dem Adreßbus (306),

der Prozessor (304) überträgt die neue Adresse, die in das Register (401) gespeichert werden soll, auf den Datenbus (305),

das Übertragermittel (418) überträgt die neue Adresse aus dem Datenbus (305) an den internen Datenbus (404),

der abhängige Prozessor (311) speichert die neue, auf dem internen Datenbus (404) vorhandene Adresse in dem Register (401), wobei dessen Ausgang mit einem ersten Eingang (X) des Komparators (410) verbunden ist und daher die neue, in dem Register (401) gespeicherte Adresse von dem Prozessor (304) verwendet werden kann, um die Schnittstellenkarte (310) zu adressieren.

CONTROL PROCESSOR
ADDRESS BUS

106

COMPARATOR

104

107   CARD SELECTION

Vcc

R

101

102

n SWITCHES
OR
STRAPES

103

105

FIG.1

CONTROL PROCESSOR DATA BUS

DAISY CHAIN SIGNAL

203

203

203

ADAPTER i

ADAPTER i+1

200

201

# FIG.2

EP 0 265 575 B1

FIG.3

FIG.4